Europäisches Patentamt

European Patent Office

Office européen des brevets

(11) Veröffentlichungsnummer: **0 443 645 A2**

(12) **EUROPÄISCHE PATENTANMELDUNG**

(21) Anmeldenummer: **91200171.6**

(22) Anmeldetag: **29.01.91**

(51) Int. Cl.⁵: **B01D 53/34**, F23J 15/00

(30) Priorität: **13.02.90 DE 4004358**

(43) Veröffentlichungstag der Anmeldung:
**28.08.91 Patentblatt 91/35**

(84) Benannte Vertragsstaaten:
**AT BE CH DE DK ES FR GB IT LI LU NL SE**

(71) Anmelder: **METALLGESELLSCHAFT**
**Aktiengesellschaft**
**Reuterweg 14**
**W-6000 Frankfurt am Main(DE)**

(72) Erfinder: **Marcks, Roland L.**
**Am Hohlgraben 16**
**W-6368 Bad Vilbel(DE)**

(54) **Abgasreinigungsverfahren.**

(57) Zur Vermeidung einer Abgasfahne bei einer Abgasreinigung mittels Naßwäsche und nachfolgender Wiederaufheizung wird vorgeschlagen, zwischen Naßwäsche und Wiederaufheizung der Abgase eine zusätzliche Abgaskühlung vorzusehen, wodurch aus dem nach der Naßwäsche gesättigten Abgas ein Teil des Wassers durch Kondensation entfernt und sichergestellt werden kann, daß bei allen vorkommenden Wetterbedingungen eine Schwadenbildung bei der Abgabe der Abgase in die Umgebung vermieden wird.

Fig.1

# ABGASREINIGUNGSVERFAHREN

Die Erfindung bezieht sich auf ein Verfahren zur Abscheidung von Schadstoffen aus Abgasen mittels Naßwäsche und Wiederaufheizung der Abgase vor Abgabe an die Umgebung.

Derartige Verfahren sind, verglichen mit sogenannten trockenen oder halbtrockenen Abgasreinigungsverfahren, hinsichtlich der Abscheideleistung im allgemeinen zwar wesentlich effektiver, erfordern aber eine Aufbereitung der schadstoffhaltigen Waschflüssigkeit und meist auch eine Wiederaufheizung der Abgase zur Vermeidung von Korrosionsproblemen oder auch nur zur Vermeidung von Schwadenbildungen bei der Abgabe der Abgase in die Umgebung. Die sichtbare Abgasfahne wird vielfach als Indiz für eine unzulässige Emission angesehen, so daß ihre Unterdrückung selbst dann verlangt wird, wenn aus Umweltschutzgründen an sich keine Notwendigkeit besteht. Insbesondere bei Standorten in dichtbesiedelten Regionen genügt es häufig nicht, daß mit dem angewandten Abgasreinigungsverfahren alle zulässigen Grenzwerte für Schadstoffemissionen deutlich und dauerhaft unterschritten werden, es muß auch vermieden werden, daß die an sich unschädliche und unvermeidbare Wasserdampfemission sichtbar wird, und zwar bei allen vorkommenden Wetterlagen.

Diese Bedingung läßt sich anhand des bekannten i, x-Diagramms für feuchte Luft von Mollier dahingehend definieren, daß sowohl die Zustandsgrößen des Abgases bei dessen Abgabe an die Umgebung als auch die sich ändernden Zustandsgrößen des Gemisches aus Abgas und Umgebungsluft in jedem Fall oberhalb der Sättigungskurve liegen müssen. Bei der Mischung der Abgase mit der Umgebungsluft ändern sich die Zustandsgrößen längs einer Geraden, die im i, x-Diagramm durch die Werte für das Abgas einerseits und die Werte für die Umgebungsluft andererseits bestimmt ist. Liegt diese Gerade vollständig oberhalb der Sättigungskurve, so erfolgt kein Auskondensieren von Wasserdampf, d.h. die Abgasfahne bleibt unsichtbar.

Daraus läßt sich die geometrische Bedingung ableiten, daß - ausgehend von einem gegebenen Punkt für die Umgebungsluft - die Zustandsgrößen des Abgases bei Abgabe an die Umgebung so gewählt werden müssen, daß sie nicht unterhalb einer von dem vorgegebenen Punkt der Umgebungsluft an die Sättigungskurve gelegten Tangente liegen dürfen. Daraus folgt ohne weiteres, daß die Temperatur - auf die die Abgase wiederaufgeheizt werden müssen - um so höher liegen muß, je kälter die Umgebungsluft ist. Daraus folgt weiter, daß die angestrebte Vermeidung einer Schwadenbildung unter Umständen nur mit einem erheblichen Energieaufwand zu erreichen ist, was dazu führen kann, daß diese Art von Abgasreinigungsverfahren als zu unwirtschaftlich abgelehnt wird.

Es besteht somit die Aufgabe, das eingangs genannte Verfahren so weiterzubilden, daß bei allen vorkommenden Wetterlagen eine Schwadenbildung bei der Abgabe der gereinigten Abgase in die Umgebung vermieden wird und daß durch den dazu erforderlichen Energieaufwand die Wettbewerbsfähigkeit des Abgasreinigungsverfahrens nicht in Frage gestellt wird.

Diese Aufgabe wird erfindungsgemäß dadurch gelöst, daß man aus den aus der Naßwäsche kommenden, mit Wasserdampf gesättigten Abgasen einen Teil des Wassergehalts durch Kühlung und Kondensation entfernt, bevor die Abgase wiederaufgeheizt werden. Die Abgase werden vor Eintritt in die Naßwäsche zweckmäßigerweise abgekühlt und die dabei anfallende Energie zur Wiederaufheizung der Abgase vor Abgabe an die Umgebung verwendet. Die aus der Naßwäsche kommenden Abgase werden erfindungsgemäß soweit abgekühlt und aus ihnen soviel Wasser durch Kondensation entfernt, daß die aus der Vor-Abkühlung (vor der Naßwäsche) verfügbare Energie ausreicht, die Abgase vor Abgabe an die Umgebung soweit aufzuheizen, daß bei ihrer Vermischung mit der Umgebungsluft keine Schwadenbildung stattfindet. Die aus der Naßwäsche kommenden Abgase werden vorteilhafterweise indirekt gekühlt, wobei Umgebungsluft verwendet werden kann. Eine vorteilhafte Anwendung des erfindungsgemäßen Verfahrens ergibt sich bei der Reinigung von Abgasen aus Müllverbrennungsanlagen.

Durch die erfindungsgemäße Maßnahme verschieben sich die Zustandsgrößen der Abgase auf der Sättigungskurve im i, x-Diagramm von einem weiter rechts liegenden Punkt zu einem weiter links liegenden Punkt. Wird danach das Abgas wiederaufgeheizt, so ändern sich die Zustandsgrößen im i, x-Diagramm längs einer Vertikalen (Wassergehalt konstant). Verglichen mit einer Zustandsänderung bei höherem Wassergehalt wird dabei jede (vom Zustand der Umgebungsluft abhängige) Tangente an die Sättigungskurve bei einer niedrigeren Temperatur geschnitten, woraus folgt, daß die Endtemperatur für die Abgasaufheizung niedriger gewählt werden kann, ohne daß eine Schwadenbildung eintritt.

Durch die erfindungsgemäß vorzunehmende Abkühlung der aus dem Naßwäscher kommenden Abgase wird außerdem erreicht, daß die mit dem Aufheizen zu realisierende Temperaturerhöhung der Abgase zu einem niedrigeren Temperaturniveau hin verschoben wird, so daß normalerweise die im Abgas vor der Naßwäsche vorhandene Abfallwärme nicht nur quantitativ, sondern auch qualitativ für die Wiederaufheizung der Abgase ausreicht. Mit anderen Worten, für den Wärmeübergang von dem noch relativ heißen Abgasstrom auf den gereinigten und zusätzlich gekühlten Abgasstrom steht stets eine ausreichend hohe Temperaturdifferenz zur Verfügung und das erfindungsgemäße Verfahren kann mit vertretbarem Aufwand für die Wärmetauscherflächen durchgeführt werden.

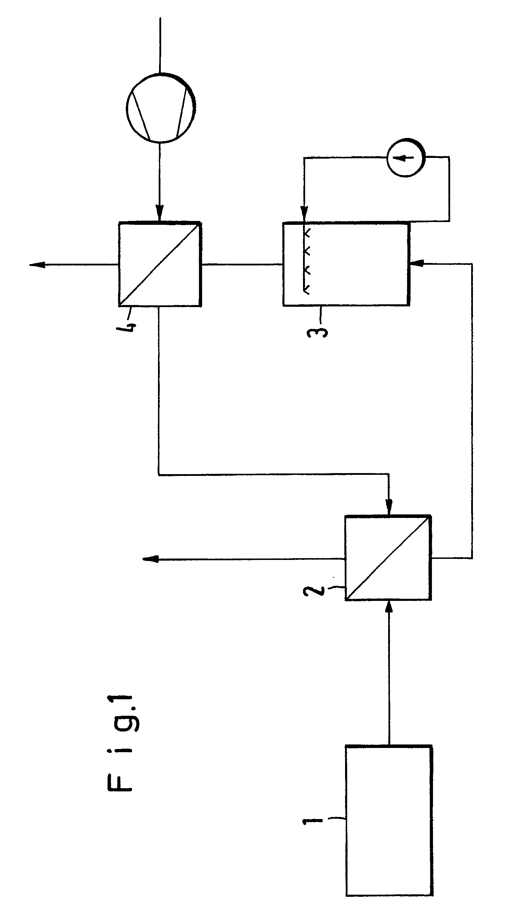

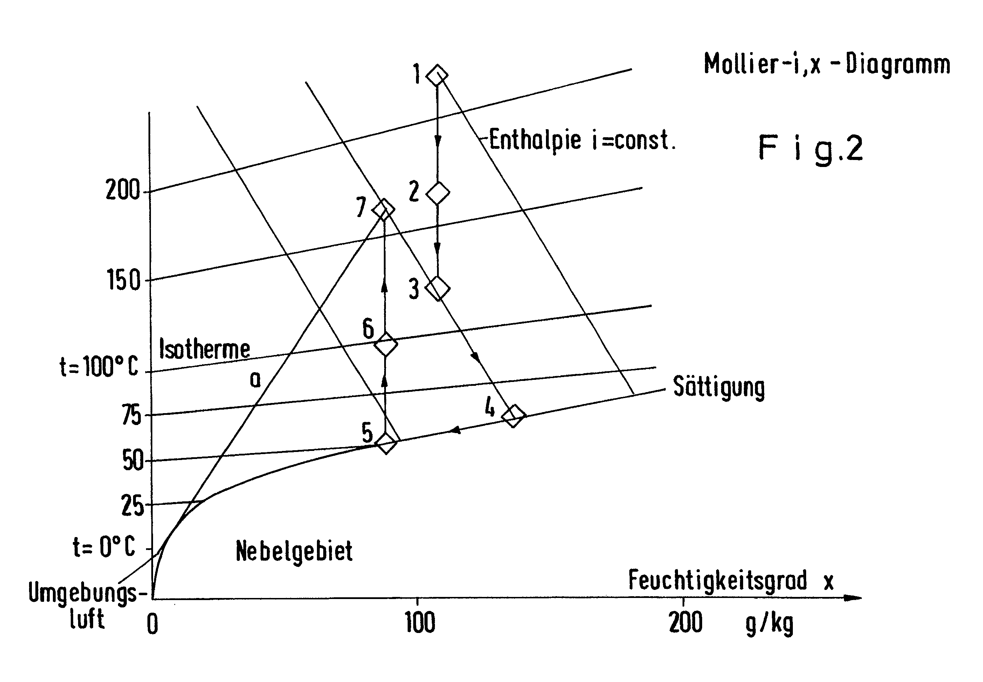

Weitere Einzelheiten des Erfindungsgedankens werden anhand des in Fig. 1 dargestellten Schaltbildes, an dem nachfolgenden Beispiel für eine Mengen- und Wärmebilanz sowie im i, x-Diagramm gemäß Fig. 2 näher erläutert.

In Fig. 1 ist eine Verbrennungseinrichtung (1) angedeutet, in der ein Abgas entsteht, das vor seiner Abgabe an die Umgebung gereinigt werden muß. Die Reinigung erfolgt mittels Naßwäscher (3), dem stromauf ein oder mehrere beliebige Reinigungsstufen vorgelagert sein können. Nach Durchlaufen des Naßwäschers (3) wird der Abgasstrom in einem Kühler (4) weiter abgekühlt, bevor er in einem Wärmetauscher (2) wiederaufgeheizt wird. Zweckmäßigerweise wird dazu das noch relativ heiße Abgas vor dessen Eintritt in den Naßwäscher (3) benutzt. Die zusätzliche Abkühlung des Abgasstroms im Anschluß an die Naßwäsche erfolgt am besten mit Umgebungsluft, wobei insofern eine gewisse Selbstregelung eintritt, als - bei sonst gleichbleibenden Parametern - die Abkühlung um so stärker ausfällt, je niedriger die Temperatur der Umgebungsluft ist. Da die zur Vermeidung einer Schwadenbildung bei der Abgabe der Abgase an die Umgebung erforderliche Kühlleistung mit fallender Umgebungstemperatur steigt, kann man sich bei richtiger Auslegung des Kühlers im Prinzip darauf verlassen, daß die zusätzliche Abkühlung der Abgase bei einer Änderung der Umgebungslufttemperatur stets den Erfordernissen entspricht.

Für eine Müllverbrennungsanlage mit einem Abgasanfall von 2 x 27700 Nm³/h wurden zur Realisierung des Erfindungsgedankens folgende Auslegungsdaten zugrundegelegt bzw. ermittelt. Das Abgas hat eine Temperatur von 220 bis 260 °C und soll im Wärmetauscher zunächst um 90 bis 110 °C vorgekühlt werden, bevor es im Wäscher mit einer im Kreislauf geführten Flüssigkeitsmenge von 90 bis 120 m³/h behandelt und auf 58 bis 64 °C abgekühlt wird. Der Wassergehalt des Abgases beträgt bei Eintritt in den Wäscher 90 bis 200 g/Nm³, am Austritt 175 bis 250 g/Nm³. Die Schadstoffgehalte liegen bei:

| | Eintritt | Austritt |
|---|---|---|
| Staub (g/Nm³) | 50 bis 500 | 5 bis 50 |
| SO₂ (g/Nm³) | 200 bis 2000 | 15 bis 150 |
| HCl (g/Nm³) | 400 bis 2500 | 10 bis 50 |
| HF (g/Nm³) | 5 bis 50 | 0,1 bis 2 |
| Hg (g/Nm³) | 0,2 bis 1 | 0,05 bis 0,2 |

Die Abgase werden sodann im Kühler auf 45 bis 58 °C abgekühlt, wobei gleichzeitig der Wassergehalt durch Auskondensieren auf 84 bis 175 g/Nm³ gesenkt wird. Anschließend erfolgt eine Wiederaufheizung der Abgase auf 120 bis 200 °C, bevor sie an die Umgebung abgegeben werden.

Für die jeweiligen Mittelwerte der vorstehenden Auslegungsdaten sind die Zustandsänderungen in das i, x-Diagramm gemäß Fig. 2 eingetragen. Zuerst erfolgt - bei unverändertem Wassergehalt - eine Abkühlung von 220 °C auf 120 °C (Wärmetauscher; Ziffern 1,2,3). Danach wird der Wassergehalt im Abgas von 160 auf 197 g/Nm³ erhöht und gleichzeitig die Temperatur auf 60 °C gesenkt (Ziffern 3,4). Mittels indirekter Kühlung wird das Abgas sodann weiter auf 52 °C abgekühlt, wobei der Wassergehalt auf 125 g/Nm³ sinkt (Ziffern 4,5). Schließlich erfolgt die Wiederaufheizung um 110 °C, so daß schließlich ein Abgas mit 162 °C vorliegt (Ziffern 5,6,7). Wird dieses Abgas in die Umgebungsluft abgegeben, für die eine Temperatur von -2 °C angenommen wurde, so ändern sich die Zustandsgrößen des Gemisches längs der eingezeichneten Linie (a), die ersichtlich an allen Stellen oberhalb der Sättigungskurve verläuft. Damit ist sichergestellt, daß bei der Abgabe der Abgase an die Umgebung keine Schwadenbildung auftritt.

**Patentansprüche**

1. Verfahren zur Abscheidung von Schadstoffen aus Abgasen mittels Naßwäsche und Wiederaufheizung der Abgase vor Abgabe an die Umgebung, dadurch gekennzeichnet, daß man aus den aus der Naßwäsche kommenden, mit Wasserdampf gesättigten Abgasen einen Teil des Wassergehalts durch Kühlung und Kondensation entfernt, bevor die Abgase wiederaufgeheizt werden.

2. Verfahren nach Anspruch 1, dadurch gekennzeichnet, daß die Abgase vor Eintritt in die Naßwäsche abgekühlt und daß die dabei anfallende Energie zur Wiederaufheizung der Abgase vor deren Abgabe an die Umgebung verwendet wird.

3. Verfahren nach Anspruch 1 oder 2, dadurch gekennzeichnet, daß die aus der Naßwäsche kommenden Abgase soweit abgekühlt und aus ihnen soviel Wasser durch Kondensation entfernt wird, daß die aus der Vor-Abkühlung (vor der Naßwäsche) verfügbare Energie ausreicht, die Abgase vor Abgabe an die Umgebung soweit aufzuheizen, daß bei ihrer Vermischung mit der Umgebungsluft keine Schwadenbildung stattfindet.

4. Verfahren nach Anspruch 3, dadurch gekennzeichnet, daß die aus der Naßwäsche kommenden Abgase indirekt gekühlt werden.

5. Verfahren nach Anspruch 4, dadurch gekennzeichnet, daß zur Kühlung der Abgase Umgebungsluft benutzt wird.

6. Anwendung des Verfahrens nach einem der Ansprüche 1 bis 5 auf die in einer Müllverbrennungsanlage anfallenden Abgase.

Fig.1

Mollier-i,x-Diagramm

F i g.2

EP 0 443 645 A2